# FASCICULE DE BREVET EUROPEEN

(11) **EP 2 561 328 B1**
(45) Date de publication et mention de la délivrance du brevet: **12.08.2015**
(21) Numéro de dépôt: 11715002.9
(22) Date de dépôt: 20.04.2011
(51) Int. Cl.: G01K 11/20, G01K 11/32

(54) **PROCEDE ET DISPOSITIF DE MESURE DE TEMPERATURES A L'AIDE DE NANOCRISTAUX SEMICONDUCTEURS**
VERFAHREN UND VORRICHTUNG ZUR TEMPERATURMESSUNG MIT HALBLEITERNANOKRISTALLEN
METHOD AND DEVICE FOR MEASURING TEMPERATURES USING SEMICONDUCTING NANOCRYSTALS

(30) Priorité: 21.04.2010 FR 1053041
(43) Date de publication de la demande: 27.02.2013
(73) Titulaire: Commissariat à l'Énergie Atomique et aux Énergies Alternatives, 75015 Paris (FR)
(72) Inventeur: REISS, Peter, F-38120 Saint Egreve (FR); COMMUNAL, Daniel, F-73110 Etable (FR)
(74) Mandataire: Ilgart, Jean-Christophe
(86) Numéro de dépôt international: PCT/EP2011/056337
(87) Numéro de publication internationale: WO 2011/131724

(56) Documents cités:
- EP-B1- 1 920 238
- US-A- 4 437 772
- US-A1- 2003 024 269
- US-A1- 2007 189 359
- LOW ET AL: "Assembly of CdSe/ZnS nanocrystals on microwires and nanowires for temperature sensing", SENSORS AND ACTUATORS B, ELSEVIER SEQUOIA S.A., LAUSANNE, CH, vol. 130, no. 1, 10 mars 2008 (2008-03-10) , pages 175-180, XP022519663, ISSN: 0925-4005, DOI: DOI:10.1016/J.SNB.2007.07.123

## Description

### DOMAINE TECHNIQUE

La présente invention concerne un procédé et un dispositif de mesure de températures, notamment de températures cryogéniques, à l'aide de nanocristaux semiconducteurs (en anglais, *semiconducting nanocrystals*), également appelés nanocristaux de semiconducteurs (en anglais, *semiconductor nanocrystals*).

Par « température cryogénique », on entend une température inférieure ou égale à -150°C (123,15 K). Mais, en général, les températures cryogéniques que l'on souhaité mesurer sont inférieures ou égales à 100 K.

Dans le domaine cryogénique, la mesure d'une température présente parfois des difficultés particulières, liées soit à des contraintes environnementales, soit à l'objet dont on veut mesurer la température.

Par exemple, dans les installations cryogéniques de liquéfaction de gaz ou de réfrigération d'aimants supraconducteurs, de fortes perturbations électromagnétiques peuvent réduire considérablement les performances des dispositifs de mesure de température.

Dans certaines de ces installations, les chaînes de mesure doivent présenter de très forts niveaux d'isolement galvanique (plusieurs kilovolts) pour garantir la sécurité.

Dans d'autres cas, on peut vouloir mesurer la température d'un objet en mouvement, par exemple la température du rotor d'une pompe froide ou la température d'un échantillon qui vibre.

Dans tous ces exemples, les techniques de mesure de températures, qui sont habituellement mises en oeuvre en cryogénie, sont mal appropriées ou carrément inadaptées. Tous les procédés classiques sont fondés sur des mesures électriques, qui nécessitent des liaisons filaires. Or ces liaisons transportent des signaux de faible niveau et sont donc très sensibles aux perturbations, car elles sont généralement non blindées dans les cryostats afin de réduire les pertes thermiques.

On a donc intérêt à rechercher des dispositifs de mesure qui soient fondés sur des phénomènes différents, afin de résoudre les problèmes mentionnés ci-dessus, tout en sachant que les dispositifs recherchés devront permettre des mesures ponctuelles de températures, entre quelques kelvins et au moins 100 K, et fournir des réponses de préférence en moins de 200 ms.

### ÉTAT DE LA TECHNIQUE ANTÉRIEURE

Pour effectuer une mesure de température sur un élément maintenu à basse température dans un cryostat, il faut munir l'élément d'un capteur. La première difficulté rencontrée dans ce cas est l'obtention d'un très bon couplage thermique entre le capteur et l'élément, afin de mesurer précisément la température de ce dernier.

Les capteurs industriels proposés se présentent sous la forme d'un boîtier qui permet un couplage thermique par serrage, collage ou insertion dans un trou calibré. Dans tous les cas, il faut s'assurer que le contact thermique est préservé, compte tenu de la contraction différentielle des différents matériaux en présence, sous l'effet du froid.

Par ailleurs, comme dans tout dispositif de mesure, le capteur ne doit pas apporter de perturbation significative sur la grandeur à mesurer. Cet aspect est très important en cryogénie : en général, les puissances frigorifiques mises en jeu diminuent avec la température à mesurer et chaque quantité de puissance à évacuer coûte de plus en plus cher au fur et à mesure que la température diminue.

Par conséquent, l'importance relative des perturbations thermiques augmente à basse température et la réduction de ces perturbations est un souci permanent pour les cryogénistes.

De plus, à l'intérieur du cryostat, il y a au moins deux types de perturbations.

D'une part, de la chaleur est apportée par l'intermédiaire des fils de liaison électrique du capteur, à cause du fort gradient thermique existant entre le connecteur de sortie du cryostat, qui est à température ambiante, et le capteur qui est à basse température. L'apport de chaleur est d'autant plus important que le capteur est muni de quatre fils de liaison, deux fils pour l'excitation et deux fils pour la mesure.

D'autre part, il existe une dissipation par effet Joule dans le capteur lui-même. Elle est due au signal d'excitation qui est nécessaire à la mesure. Il faut savoir que les capteurs les plus fréquemment utilisés en cryogénie sont justement des résistances électriques qui sont sensibles à la température, et que les valeurs de ces résistances sont élevées et augmentent à basse température.

Dès lors, des précautions sont indispensables dans tous les cas, pour réduire ces perturbations. Il est notamment nécessaire :
- d'employer des fils très fins qui conduisent mal la chaleur (par exemple en Manganin^{®}) et sont sans blindage,
- de mettre en place des dispositifs de thermalisation pour dériver le flux thermique avant qu'il n'atteigne le capteur, et
- de minimiser le signal d'excitation du capteur.

Toutes ces précautions conduisent à un accroissement des difficultés de mesure car les signaux obtenus ont un faible niveau (quelques millivolts au maximum) et sont généralement bruités.

Dans certains cas, où des mesures très précises sont demandées, ou bien lorsque la température est inférieure à 1 K, il devient indispensable de mettre en oeuvre des techniques de modulation et démodulation synchrones, qui sont les seules à permettre d'atteindre des performances suffisantes.

En fait, la technique de mesure électrique est complexe et délicate à mettre en oeuvre, même si elle est très bien maîtrisée par les cryogénistes. De plus, on utilise souvent un grand nombre de capteurs de température de sorte que de nombreux fils très fins et fragiles s'entrecroisent dans les parties froides des cryostats et sont souvent des sources de pannes.

Il existe en outre différentes techniques optiques pour mesurer des températures à l'aide de fibres optiques. Ces techniques peuvent être classées en deux grandes catégories selon qu'elles permettent de faire des mesures réparties ou ponctuelles.

Les capteurs de la première catégorie sont dits « intrinsèques » car une fibre optique y joue elle-même le rôle de capteur. Les techniques de mesure mises en oeuvre exploitent des phénomènes de diffraction de type Raman ou Brillouin, ou bien utilisent des réseaux de Bragg (en anglais, *Bragg gratings)* qui sont répartis le long de la fibre.

Ces capteurs permettent en principe d'obtenir un profil de température le long de la fibre, ce qui présente un intérêt certain dans des installations étendues. En contrepartie, ils sont peu précis, leur résolution reste assez faible, et leurs temps d'acquisition sont souvent très longs (plusieurs minutes). Et, même s'ils peuvent en principe couvrir une large gamme de températures, ils sont essentiellement utilisés en dehors du domaine cryogénique, par exemple pour la surveillance d'ouvrages d'art ou de câbles de puissance enterrés.

Les capteurs de la seconde catégorie sont dits « extrinsèques » car la fibre optique ne sert qu'à véhiculer la lumière : le capteur est monté à une extrémité de la fibre, là où s'effectue la mesure.

Différents phénomènes optiques peuvent être exploités dans cette seconde catégorie. L'un des plus utilisés dans le domaine industriel est certainement la photoluminescence du phosphore ou de divers composés à base de terres rares (par exemple CaF₂:Yb₂ ou SrF₂ : Yb₂).

Ces composés permettent de construire des capteurs en exploitant soit l'intensité soit le temps de décroissance de la fluorescence (en anglais, *fluorescence decay time).* L'utilisation de ce dernier conduit d'ailleurs à la technique la plus intéressante en termes de performance et de stabilité.

### EXPOSÉ DE L'INVENTION

Dans la présente invention, on remplace les liaisons électriques par une transmission optique, ce qui permet de résoudre les problèmes qui sont liés à de telles liaisons.

Il existe effectivement de nombreuses techniques de mesure de températures qui sont fondées sur des phénomènes optiques, mais l'immense majorité d'entre elles ne permet pas d'accéder au domaine cryogénique.

De plus, avec la présente invention, on souhaite pouvoir faire des mesures ponctuelles, avec ou sans contact direct avec un objet dont on veut mesurer la température, et avec un temps d'acquisition raisonnable. Dès lors, la technique de mesure par fluorescence semble être la plus appropriée.

Rappelons que la fluorescence, ou photoluminescence, est la propriété qu'a un matériau de réémettre de la lumière à une longueur d'onde différente de celle d'une lumière qu'il a reçue.

Lorsqu'un objet fluorescent reçoit une impulsion de lumière, il émet un spectre de fluorescence dont l'intensité décroît au cours du temps. Or le temps de décroissance dépend directement de la température de l'objet. Par conséquent, sa mesure permet de connaître cette température.

Cette technique peut être mise en oeuvre à haute température (de l'ordre de 20°C ou plus), à l'aide de matériaux fluorescents massifs, mais pose des problèmes à basse température car ces matériaux perdent alors leur sensibilité, surtout à cause de la baisse du rendement de fluorescence.

Toutefois, on connaît les nanocristaux semiconducteurs, ou nanocristaux de matériaux semiconducteurs, qui possèdent des propriétés de fluorescence intéressantes, même à basse température, avec des rendements de fluorescence qui restent bons et des temps de décroissance qui sont assez facilement mesurables.

Grâce à la dépendance entre la longueur d'onde de fluorescence et la taille des nanocristaux, il est possible de choisir le spectre d'émission des nanocristaux en modifiant leurs dimensions.

Une autre propriété intéressante est liée à la large bande d'absorption des nanocristaux semiconducteurs. En effet, tous les photons ayant une énergie plus grande que la largeur de bande interdite (en anglais, *forbidden energy gap)* sont absorbés.

Ainsi, on peut obtenir une grande séparation entre le spectre de fluorescence et le spectre de la lumière d'excitation. Ceci facilite la détection de la fluorescence et permet donc de simplifier le dispositif de mesure de température.

En particulier, les nanocristaux qui sont faits de CdSe (séléniure de cadmium) et sont recouverts d'une double coquille de CdS/ZnS ont les bonnes propriétés pour réaliser un capteur : ils ont un rendement de fluorescence élevé et une bonne stabilité dans le temps.

Conformément à l'invention, on a conçu un capteur ponctuel avec contact, en plaçant une couche sensible, faite de nanocristaux d'un matériau semiconducteur (on dit aussi « semiconducteur » au lieu de « matériau semiconducteur »), à l'extrémité d'un guide d'onde optique (en anglais, *optical waveguide*), généralement une fibre optique, servant à guider les signaux optiques. La mesure s'effectue par contact direct entre l'extrémité de la fibre et l'objet dont la température est à mesurer.

Dans une version sans contact, la couche sensible est, au contraire, placée sur l'objet, et l'on assure un couplage optique aérien entre la couche sensible et la fibre optique.

Revenons sur les nanocristaux semiconducteurs. Ce sont des matériaux luminescents, connus depuis plusieurs décennies. Leur spectre d'émission dépend de leur taille lorsque celle-ci devient suffisamment petite. Pour des cristaux dont la taille se situe approximativement dans la gamme allant de 1 nm à 10 nm, cette dépendance est extrêmement prononcée.

La palette entière des couleurs des domaines visible, proche-infrarouge et ultraviolet peut être obtenue avec des nanocristaux semiconducteurs, par un choix approprié de leur taille et de leur composition. Pour couvrir le spectre visible, les matériaux les plus étudiés sont les chalcogénures de cadmium (CdS, CdSe, CdTe).

D'une manière générale, la qualité optique d'un matériau luminescent, composé de nanocristaux semiconducteurs, dépend de plusieurs paramètres, dont les plus importants sont :
- la taille des nanocristaux, qui règle la longueur d'onde d'émission,
- la distribution des tailles des nanocristaux, qui règle la largeur de raie d'émission, et
- la passivation de surface des nanocristaux, qui est responsable du rendement quantique de fluorescence et de la stabilité dans le temps des nanocristaux.

Une technique efficace pour augmenter ce rendement quantique consiste à passiver une couche, ou coeur (en anglais, core), de nanocristaux d'un premier matériau semiconducteur, tel que CdSe par exemple, en faisant croître autour de ce coeur une autre couche, ou coquille (en anglais, *shell)* d'un second matériau semiconducteur, par exemple ZnS, dont la largeur de bande interdite est supérieure à celle du matériau du coeur. Ce système est appelé « coeur/coquille » dans la littérature scientifique.

A ce sujet, on pourra se reporter au document suivant :
**P. Reiss, M. Protière et L. Li :** « Core/shell semiconductor nanocrystals », Small 5, 154 (2009).

Pour un système CdSe/ZnS, c'ést-à-dire un système dont le coeur est fait de nanocristaux de CdSe et la coquille est faite de nanocristaux de ZnS, on peut obtenir un rendement quantique de fluorescence de l'ordre de 50% à 60%.

L'ajout d'une coquille intermédiaire en CdS ou en ZnSe, entre le coeur et la précédente coquille, ou coquille extérieure, améliore davantage les propriétés optiques, et un rendement quantique supérieur à 70% peut être obtenu. En outre, la présence de la coquille intermédiaire permet de diminuer les contraintes cristallographiques entre le matériau du coeur et la coquille extérieure.

US 2007/189359 décrit des capteurs de température et de pression utilisant des nanoparticules. EP 1 920 238 décrit un procédé de mesure de la pression partielle d'oxygène utilisant la luminescence du dioxyde de zirconium.

La présente invention a pour objet un procédé de mesure de la température d'un objet, notamment d'un objet à température cryogénique, procédé dans lequel :
- on utilise un capteur comportant une première couche de nanocristaux d'un premier semiconducteur,
- on met la première couche de nanocristaux en contact thermique avec l'objet,
- on irradie les nanocristaux par une lumière d'excitation, apte à exciter les nanocristaux pour qu'ils émettent un rayonnement de fluorescence, et
- on détecte le rayonnement de fluorescence,
- on détermine le temps de décroissance du rayonnement de fluorescence, le temps de décroissance étant fonction de la température à mesurer, et
- on détermine la température à mesurer à partir du temps de décroissance ainsi déterminé.

Un tel procédé est connu par le document US 2007/189359. Toutefois, un problème se pose : notamment dans le domaine cryogénique, la liaison optique entre le capteur et des moyens de mesure associés peut être longue. Elle peut même être formée de plusieurs tronçons reliés par des connecteurs optiques.

Or, on peut envisager d'effectuer la mesure de température en modulant la lumière d'excitation et en exploitant le déphasage entre le signal de modulation de cette lumière et la modulation du signal de fluorescence. Mais la mesure de température est alors directement influencée par la longueur totale de la liaison optique.

La présente invention a pour but de résoudre ce problème en mesurant le déphasage entre la modulation du signal d'excitation, réfléchi au niveau du capteur, et la modulation du signal de fluorescence.

Comme ces deux signaux parcourent le même chemin optique jusqu'à l'entrée des moyens de mesure, la longueur de la liaison optique n'a plus d'influence sur la mesure de température.

La présente invention permet donc de s'affranchir d'un calibrage *in situ* de l'ensemble formé par le capteur et la liaison optique.

De façon précise, la présente invention concerne un procédé, de mesure de la température d'un objet comme défini dans la revendication 1, tel que mentionné ci-dessus, caractérisé en ce que l'on module la lumière d'excitation par un signal de modulation, on mesure le déphasage entre le signal de modulation de la lumière d'excitation, qui est réfléchie par le capteur, et le rayonnement de fluorescence détecté, et l'on détermine le temps de décroissance à partir du déphasage ainsi mesuré.

Selon l'invention :
- le capteur comporte en outre un guide d'onde optique,
- on utilise le guide d'onde optique pour envoyer la lumière d'excitation vers les nanocristaux et pour récupérer et transmettre le rayonnement de fluorescence en vue.de la détection de celui-ci, et
- on module la lumière d'excitation par un signal de modulation, on mesure le déphasage entre le signal de modulation de la lumière d'excitation, qui est réfléchie par l'extrémité du guide d'onde optique, et le rayonnement de fluorescence détecté (28), et l'on détermine le temps de décroissance à partir du déphasage ainsi mesuré.

La première couche de nanocristaux peut être placée à une extrémité du guide d'onde optique ou sur l'objet.

La présente invention concerne en outre un dispositif de mesure de la température d'un objet comme défini dans la revendication 2, notamment d'un objet à température cryogénique, le dispositif comprenant :
- un capteur comportant une première couche de nanocristaux d'un premier semiconducteur, la première couche de nanocristaux étant prévue pour être mise en contact thermique avec l'objet,
- une source de lumière d'excitation pour irradier les nanocristaux, la lumière d'excitation étant apte à exciter les nanocristaux pour qu'ils émettent un rayonnement de fluorescence.
- un détecteur du rayonnement de fluorescence, apte à fournir un signal représentatif de celui-ci,
des circuits électroniques pour déterminer le temps de décroissance du rayonnement de fluorescence à partir du signal ainsi fourni, le temps de décroissance étant fonction de la température à mesurer, et pour déterminer la température à mesurer à partir du temps de décroissance ainsi déterminé,
caractérisé en ce que les circuits électroniques sont configurés pour moduler la lumière d'excitation par un signal de modulation, pour mesurer le déphasage entre le signal de modulation de la lumière d'excitation, qui est réfléchie par le capteur, et le rayonnement de fluorescence détecté, et pour déterminer le temps de décroissance à partir du déphasage ainsi mesuré.

Selon l'invention, le capteur comprend en outre un guide d'onde optique à une extrémité duquel est placée la première couche de nanocristaux, et les circuits électroniques sont configurés pour moduler la lumière d'excitation (26) par un signal de modulation, pour mesurer le déphasage entre le signal de modulation de la lumière d'excitation, qui est réfléchie par l'extrémité du guide d'onde optique, et le rayonnement de fluorescence détecté (28), et pour déterminer le temps de décroissance à partir du déphasage ainsi mesuré.

De préférence, le capteur comprend en outre un réflecteur de lumière pour réfléchir, dans le guide d'onde optique, le rayonnement de fluorescence émis par les nanocristaux.

De préférence, la taille des nanocristaux va de 1 nm à 10 nm.

Le premier semiconducteur peut être choisi parmi Si, Ge, ZnO, ZnS, ZnSe, ZnTe, CdS, CdSe, CdTe, HgS, HgSe, HgTe, AlN, AlP, AlAs, AlSb, GaN, GaP, GaAs, GaSb, InN, InP, InAs, InSb, TlN, TlP, TlAs, TlSb, PbS, PbSe, PbTe, SnS, SnSe, SnTe, MgS, MgSe, MgTe, CaS, CaSe, CaTe, SrS, SrSe, SrTe, BaS, BaSe, BaTe, CuInE₂, AgInE₂ Cu(InₓGa₁₋ₓ)E₂, Cu₂ZnₓSn_{y}E_{1+x+2y} (où E est choisi parmi S, Se et Te et 0≤x≤1) et des mélanges de ceux-ci.

Selon un mode de réalisation préféré de l'invention :
- le capteur comprend en outre une deuxième couche de nanocristaux d'un deuxième semiconducteur, qui entoure la première couche, et
- la largeur de bande interdite du deuxième semiconducteur est supérieure à la largeur de bande interdite du premier semiconducteur.

De préférence :
- le capteur comprend en outre une troisième couche de nanocristaux d'un troisième semiconducteur, entre les première et deuxième couches,
- la largeur de bande interdite du troisième semiconducteur est supérieure à la largeur de bande interdite du premier semiconducteur, et
- le paramètre de maille cristalline du troisième semiconducteur est intermédiaire entre celui du premier semiconducteur et celui du deuxième semiconducteur.

Certes, on connaît déjà une composition permettant de mesurer des températures, par le document suivant auquel on se reportera

### Demande internationale, n° de publication WO 02/065077, Temperature-sensing composition.

Ce document divulgue l'utilisation de la fluorescence de nanocristaux semiconducteurs pour mesurer des températures.

Toutefois, la technique divulguée par ce document est utilisée pour mesurer des variations de température dans la gamme allant de 5°C à 40°C, tandis que la présente invention porte essentiellement sur la mesure de très basses températures, allant de quelques kelvins à quelques dizaines de kelvins, en tout cas des températures essentiellement inférieures à -150°C.

De plus, dans le document, on utilise la dépendance entre l'intensité de la fluorescence et la température pour déterminer cette dernière, alors que la présente invention utilise la dépendance entre le temps de décroissance de la fluorescence (en anglais, *fluorescence decay time)* et la température pour déterminer cette dernière.

L'intensité de la fluorescence et le temps de décroissance de la fluorescence sont deux paramètres complètement différents ; et l'intensité de la fluorescence est soumise à des variations beaucoup plus aléatoires que le temps de décroissance de la fluorescence.

De plus, la variation de l'intensité de la fluorescence en fonction de la température n'est pas très prononcée (1,1% à 1,6% par degré Celsius), ce qui conduit à une faible précision relative pour la mesure.

En outre, dans le document, il est question de faire une cartographie de la température d'une surface, ce qui n'est pas l'objet de la présente invention.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en coupe transversale schématique d'un ensemble de nanocristaux que l'on peut utiliser pour la mise en oeuvre de la présente invention,
- la figure 2 est une vue en coupe longitudinale schématique de la partie active d'un capteur que l'on peut utiliser pour la mise en oeuvre de la présente invention,
- la figure 3 est une vue schématique et partielle d'un mode de réalisation particulier d'un dispositif qui peut être utilisé dans l'invention,
- la figure 4 est une vue schématique d'un ensemble de circuits électroniques qui sont associés au dispositif représenté sur la figure 3,
- la figure 5 montre les variations du temps de décroissance de la fluorescence en fonction de la température, pour un exemple du dispositif, objet de l'invention,
- la figure 6 est une vue schématique et partielle d'un mode de réalisation particulier du dispositif, objet de l'invention,
- la figure 7 est une vue en coupe longitudinale schématique de la partie active d'un autre capteur que l'on peut utiliser pour la mise en oeuvre de la présente invention, et
- la figure 8 est une vue schématique et partielle d'un autre mode de réalisation particulier du dispositif, objet de l'invention.

### EXPOSÉ DÉTAILLÉ DE MODES DE RÉALISATION PARTICULIERS

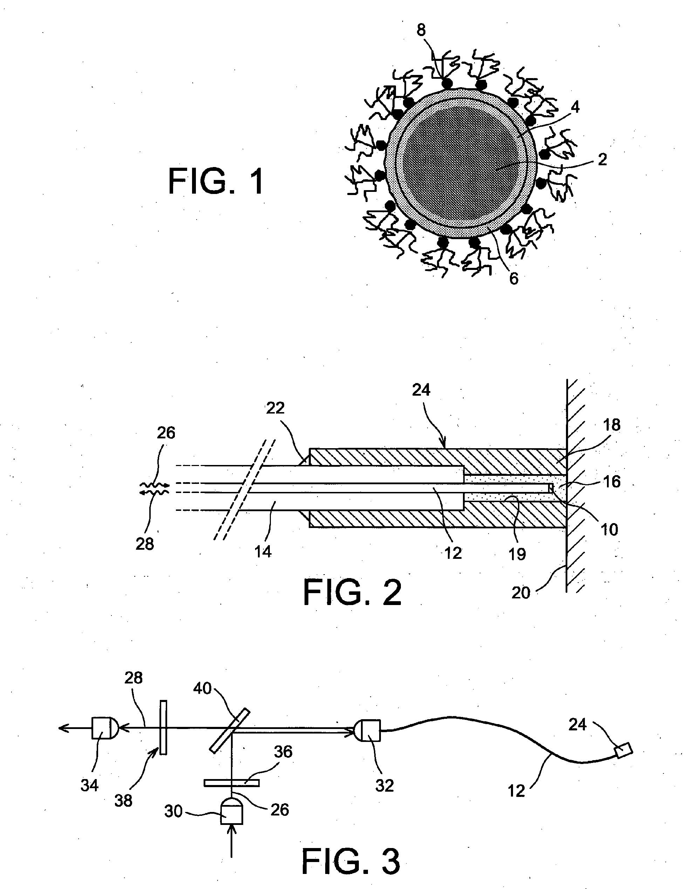

Dans un exemple de l'invention, pour mesurer la température d'un objet, généralement un objet à une température cryogénique, on fabrique un capteur à partir d'une couche 2, ou coeur, de nanocristaux de CdSe (séléniure de cadmium), de 42 Å (4,2 nm) de diamètre, pourvue d'une double coquille en CdS/ZnS (figure 1).

Plus précisément, le coeur 2 est entouré d'une couche intermédiaire 4, ou coquille intermédiaire, de nanocristaux de CdS ; et la coquille intermédiaire 4 est entourée d'une couche externe 6, ou coquille externe, de nanocristaux de ZnS.

En outre, une couche de passivation 8, généralement faite de ligands organiques, par exemple une couche de PMMA, entoure la couche externe 6.

Les nanocristaux du coeur 2 peuvent être excités par une lumière ultraviolette (longueur d'onde : 400 nm) et présentent alors une émission de fluorescence de couleur orange (longueur d'onde : 600 nm).

L'ensemble 10 des couches 4 à 8 ainsi obtenu est déposé à l'extrémité d'une fibre optique 12 de silice pure, de 100 µm de diamètre (figure 2). Cette fibre a préalablement été privée de sa gaine protectrice 14 sur une longueur de quelques millimètres.

La partie sensible du capteur, que l'on a ainsi formée, est recouverte d'une couche d'un matériau d'étanchéité 16 (en anglais, *sealant*), par exemple une couche de graisse Apiezon^{®}, puis cette partie sensible est insérée dans un embout métallique 18 ayant une bonne conductivité thermique, afin d'assurer un bon couplage thermique avec l'objet à mesurer 20.

Au lieu de cela, on pourrait remplir le trou 19 de l'embout de graisse puis y introduire la partie sensible du capteur.

On voit aussi que l'embout 18 est fixé à la gaine protectrice 14 par une couche de colle 22.

Il s'agit donc d'une mesure avec contact : l'extrémité du capteur obtenu 24, au niveau de laquelle se trouve l'ensemble de nanocristaux 10, est mise en contact direct avec l'objet 20. Les nanocristaux sont ainsi en contact thermique avec cet objet 20.

De plus, la mesure est ponctuelle : on mesure la température d'un point de l'objet (zone dont la taille est sensiblement égale à la taille de l'ensemble de nanocristaux 10, c'est-à-dire de l'ordre de quelques manomètres).

Pour mesurer la température, on envoie un signal lumineux d'excitation 26 vers la couche de nanocristaux 2 par l'intermédiaire de la fibre optique 12. Les nanocristaux ainsi excités émettent un rayonnement de fluorescence 28 qui est récupéré et transmis par la fibre 12 en vue du traitement de ce rayonnement pour déterminer la température de l'objet.

Plus précisément, le signal d'excitation 26, transmis par la fibre optique 12, est engendré par une diode émettrice de lumière violette 30 (figure 3). L'amplitude de la lumière émise par cette diode est modulée par un signal qui est de préférence sinusoïdal. L'onde lumineuse obtenue est injectée dans la fibre 12 (dont la gaine protectrice 14 n'est représentée) par l'intermédiaire d'un collimateur de fibre optique 32 et atteint la couche de nanocristaux 2 après s'être propagée dans la fibre.

La lumière de fluorescence 28, produite par la couche 2 de nanocristaux, se propage alors dans la fibre, du capteur 24. au collimateur 32, et atteint un photodétecteur 34.

Comme on le voit sur la figure 3, un filtre 36, plus précisément un filtre passe-bande à 405 nm, est placé à la sortie de la diode 30 ; et un filtre 38, plus précisément un filtre passe-bande à 600 nm, est placé à l'entrée du photodétecteur 34.

De plus, la lumière d'excitation 26, issue du filtre 36, atteint le collimateur 32 après réflexion sur un miroir semi-transparent 40 ; et la lumière de fluorescence 28, issue du collimateur 32, atteint le photodétecteur 34 après avoir traversé le miroir semi-transparent 40 puis le filtre 38.

Le filtre 38 arrête la lumière d'excitation 26 réfléchie, susceptible d'atteindre le photodétecteur 34 ; et le filtre 36 arrête les longueurs d'onde indésirables de la lumière 26 émise par la photodiode pour garantir une bonne séparation entre les lumières d'excitation et de fluorescence.

La sortie du photodétecteur 34 fournit un signal électrique qui est représentatif de la modulation de la lumière de fluorescence. Le déphasage ϕ entre le signal sinusoïdal de modulation et le signal de sortie du photodétecteur 34 est une fonction du temps de décroissance de la fluorescence Td.

En mesurant ce déphasage, on détermine ce temps Td ; puis on en déduit la valeur T de la température à mesurer. Pour ce faire, on détermine préalablement une loi d'étalonnage, c'est-à-dire une relation entre Td et T. En fait, comme on l'a vu plus haut, l'invention utilise un autre déphasage et l'on reviendra sur cette question par la suite ; mais l'exemple décrit est néanmoins utile pour la compréhension de l'invention.

Pour un type donné de nanocristaux et un procédé donné de fabrication de ceux-ci, la reproductibilité est suffisante pour établir une « loi d'étalonnage standard » qui correspond à un calibrage de base. Un étalonnage plus précis peut être associé à chaque capteur.

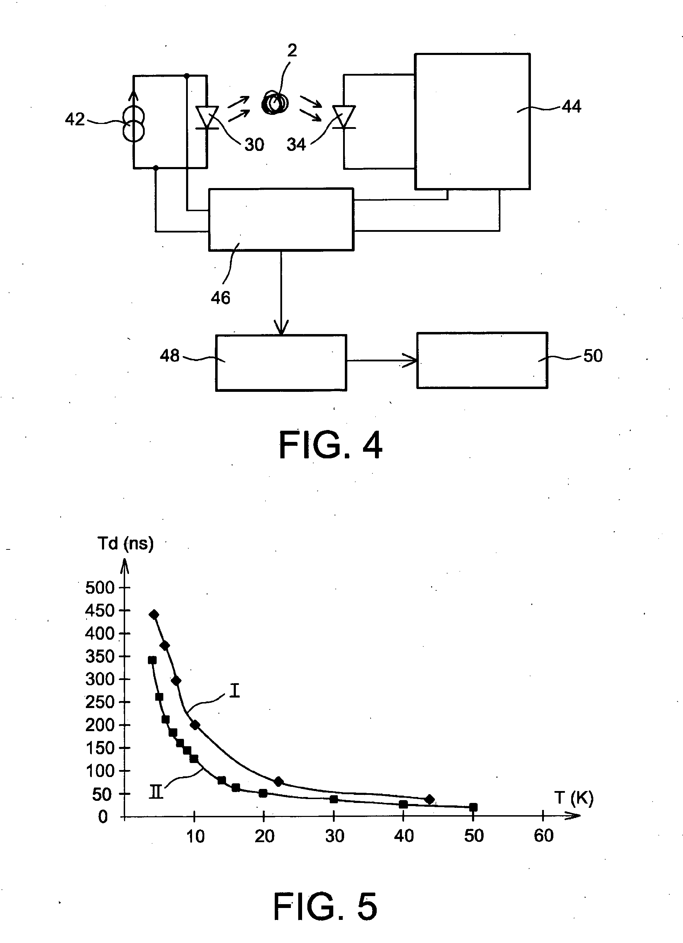

La figure 4 est une vue schématique des circuits électroniques qui sont associés à la diode émettrice de lumière 30 et au photodétecteur 34 de la figure 3.

Comme on le voit, un générateur de courant 42 est connecté aux bornes de la diode 30 pour commander l'émission lumineuse modulée sinusoïdalement de celle-ci ; un amplificateur à transimpédance 44 est connecté aux bornes du photodétecteur 34 afin d'obtenir le signal de sortie de celui-ci ; et un amplificateur à détection synchrone 46 (en anglais, *lock-in amplifier)* est relié, d'une part, aux bornes de la diode 30 et, d'autre part, à l'amplificateur 44 pour déterminer et fournir en sortie le déphasage ϕ entre le signal sinusoïdal de modulation et la sortie du photodétecteur 34.

Un circuit électronique 48 de traitement du signal de sortie de l'amplificateur 46 est prévu pour déterminer la température T à partir de la loi d'étalonnage qui est mémorisée dans ce circuit de traitement 48. Ce circuit 48 est muni d'un dispositif 50 d'affichage de la température ainsi déterminée et d'une interface (non représentée) de communication standard (par exemple RS232 ou Ethernet) pour transmettre la mesure à distance.

La vérification du principe de fonctionnement de l'exemple de capteur précédemment décrit a été réalisée avec un banc optique expérimental, couplé à la fibre optique 12. Plusieurs capteurs ont été testés à différentes fréquences de modulation, dans une gamme de températures allant de 4 K à 50 K.

La figure 5 donne, pour un capteurs, la relation (courbe I) entre le temps de décroissance de la fluorescence Td et la température à mesurer T. Cette relation est obtenue à partir d'une mesure de phase à une fréquence de modulation Fm égale à 1 MHz.

Pour passer de la mesure du déphasage ϕ au temps de décroissance Td, ou temps de réponse, on considère que le capteur se comporte, vis-à-vis du signal de modulation, comme un filtre passe-bas du premier ordre. Dès lors, le temps de réponse s'écrit simplement : Td = 3.tan(ϕ)/(2.π.Fm).

La courbe II de la figure 5 correspond à la caractéristique de référence pour un nanocristal de CdSe, entouré par une coquille de ZnS, l'ensemble ayant un rayon de 2,1 Å (0,21 nm). A ce sujet, on se reportera au document suivant :
S.A. Crooker, T. Barrick, J.A. Hollingsworth et V.I. Klimov : « Multiple température regimes of radiative decay in CdSe nanocrystal quantum dots : Intrinsic limits to the dark-exciton lifetime », Applied Physics Letters, volume 82, numéro 17, 2003.

On remarque que les deux courbes I et II ont la même allure, alors que les composés utilisés sont un peu différents. En effet, le capteur comporte des nanocristaux fortement concentrés, à coquille intermédiaire de CdS, ce qui n'est pas le cas avec les nanocristaux de la courbe de référence II.

L'installation expérimentale, dont il vient d'être question, est destinée à vérifier le principe de fonctionnement d'un dispositif conforme à l'invention. Les performances de cette installation sont assez limitées. Mais comme elles dépendent directement du niveau des signaux mesurés, elles peuvent être largement améliorées avec un capteur et une chaîne de mesure optimisés.

Les résultats obtenus démontrent en tout cas qu'un exemple de dispositif conforme à l'invention, fonctionne à partir de quelques kelvins jusqu'à au moins 50 K.

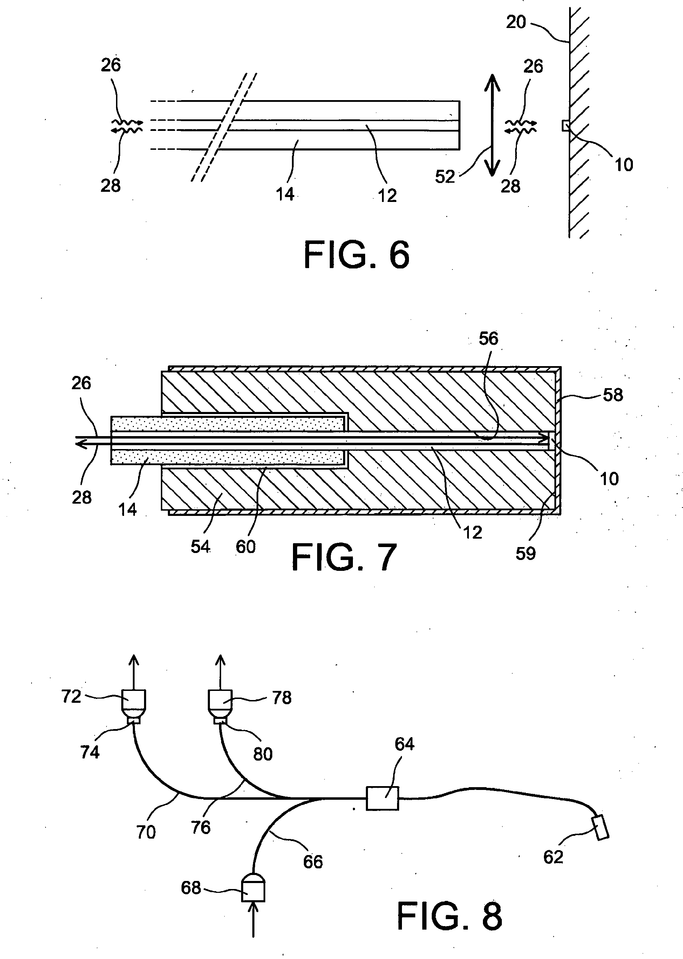

La figure 6 illustre schématiquement une mesure de température sans contact, effectuée conformément à l'invention.

Dans ce cas, l'ensemble 10 des couches 2, 4, 6 et 8 (figure 1) est déposé sur un substrat (non représenté) bon conducteur thermique et l'ensemble 10 est recouvert d'une couche ou d'un film transparent (non représenté). Puis le substrat est fixé à une zone ponctuelle de l'objet 20, dont on veut mesurer la température. La fixation peut être effectuée par collage, à l'aide de colle Stycast^{®} par exemple.

La fibre optique 12, pourvue de sa gaine protectrice 14 et maintenue par des moyens appropriés, non représentés, est alors simplement utilisée pour focaliser la lumière d'excitation 26 sur l'ensemble 10, par l'intermédiaire d'une lentille appropriée 52, et pour récupérer et transmettre le rayonnement de fluorescence 28 en vue de la détection de celui-ci et de la mesure de la température.

A ce sujet, on se reportera à la description des figures 3 et 4.

A ce propos, revenons sur ces figures. Pour la mise en oeuvre de l'invention à partir du dispositif représenté sur la figure 3, on pourrait utiliser par exemple un miroir semi-transparent pour récupérer la lumière d'excitation 26 réfléchie vers le photodétecteur 34 puis mesurer le déphasage entre le signal de modulation de cette lumière réfléchie et la lumière de fluorescence détectée par le photodétecteur 34. L'homme du métier pourrait alors adapter les circuits électroniques représentés sur la figure 4 pour déterminer ce déphasage et en déduire la température. Mais un autre exemple de l'invention sera donné.plus loin en faisant référence à la figure 8.

On donne ci-après, un exemple de fabrication d'un dispositif à fibre optique et nanocristaux, conforme à l'invention.

On décrit d'abord la synthèse des nanocristaux.

Toutes les manipulations de matériaux sensibles à l'air sont faites en utilisant une rampe à vide (en anglais, *vacuum line)* standard ou de type Schlenk.

Pour la caractérisation, les spectres d'absorption des domaines ultraviolet et visible ont été mesurés à l'aide d'un spectromètre Hewlett-Packard 8452A (domaine spectral en longueur d'onde : 190-820 nm, résolution 2 nm) ; et les spectres de photoluminescence ont été acquis avec un spectromètre Hitachi F-4500. Pour ces mesures spectroscopiques, les solutions colloïdales diluées de nanocristaux dans de l'hexane ont été placées dans des cuvettes en quartz ayant un chemin optique 1 cm.

Les rendements quantiques de fluorescence à température ambiante ont été obtenus par comparaison de l'intensité d'émission, intégrée spectralement, de la solution de nanocristaux dans l'hexane avec l'intensité d'émission d'une solution de rhodamine 6G dans l'éthanol, les deux solutions ayant la même densité optique (inférieure à 0,03) à la longueur d'onde d'excitation (490 nm).

Les images de microscopie électronique à transmission ont été acquises avec un microscope JEOL 4000FX.

Tous les produits, sauf le stéarate de zinc (Riedel de Haën), ont été achetés chez Sigma-Aldrich et utilisés tels quels. La synthèse d'éthylxanthate de zinc [cadmium], utilisé dans la croissance de la coquille, est décrite par la suite : 0,005 mol de chlorure de zinc [cadmium] est dissous dans 20 mL (mL : millilitres) d'eau distillée. On lui ajoute une solution de 0,01 mol d'éthylxanthogénate de potassium, dissous dans 20 mL d'eau distillée. Un précipité blanc est ainsi formé. Il est filtré puis lavé trois fois avec 50 mL d'eau distillée, puis séché sous vide.

On décrit ci-après un exemple (exemple 1) de préparation des nanocristaux d'un coeur en CdSe dont le diamètre moyen vaut 4,2 nm. Ces nanocristaux serviront ultérieurement à la préparation de nanocristaux pour une structure coeur/double coquille CdSe/CdS/ZnS.

On place 8 mmol de stéarate de cadmium (précurseur de cadmium), 184 mmol d'acide stéarique, 200 mL d'oléylamine et 400 mL de 1-octadécène dans un réacteur de 2 litres, comportant un thermomètre, un condenseur, et un agitateur mécanique. Le mélange est dégazé sous vide primaire pendant une heure, puis le réacteur est rempli d'argon et chauffé à 250°C sous agitation.

Une solution de sélénium, de concentration 0,4 mol/litre, est préparée séparément, à température ambiante sous atmosphère inerte, en dissolvant 40 mmol de poudre de Se dans 100 mL de trioctylphosphine. Cette solution est injectée rapidement dans le ballon contenant la solution de précurseur de Cd, toujours sous agitation vigoureuse. Au bout de 15 minutes, le milieu réactionnel est refroidi à environ 80°C afin d'arrêter la croissance des nanocristaux.

Ces derniers sont alors précipités par ajout de 500 mL d'acétone, puis de 200 mL d'éthanol.à 50°C et encore de 300 mL d'acétone à 40°C. Ils sont ensuite séparés du liquide excédentaire par filtration à l'aide d'une colonne frittée.

Le rendement quantique obtenu vaut 9% et le rendement chimique vaut 2,1 g (88%).

On décrit ci-après un exemple (exemple 2) de la préparation de nanocristaux coeur/double coquille CdSe/CdS/ZnS (diamètre du coeur en CdSe : 4,2 nm ; diamètre de la couche coeur/double coquille : 6,2 nm).

Dans un ballon de 100 mL, 0,62 mmol d'éthylxanthate de cadmium, dissous dans 7,8 mL de trioctylphosphine, sont mélangés sous atmosphère inerte avec 1,9 mmol de stéarate de cadmium, dissous dans 22 mL de 1-octadécène. Ce mélange des précurseurs pour la coquille de CdS est placé dans une seringue.

Le mélange de précurseurs pour la coquille de ZnS est préparé de manière analogue, en utilisant 2,5 mmol d'éthylxanthate de zinc dans 31 mL de trioctylphosphine et 7,5 mmol de stéarate de zinc dans 98 mL de 1-octadécène.

Dans un réacteur d'un litre, on disperse environ 5x10⁻³ mmol de nanocristaux de coeur, ayant un diamètre moyen de 4,2 nm, et préparés comme on l'a décrit dans l'exemple 1, dans un solvant constitué par un mélange de 220 mL d'oléylamine et de 220 mL de 1-octadécène, que l'on a dégazé sous vide primaire pendant une heure. Le réacteur est rempli avec de l'argon et le mélange est chauffé à 200°C.

Dès que la température est stabilisée, la solution contenant le mélange des précurseurs pour la coquille de CdS est lentement injectée dans le ballon par un pousse-seringue, pendant 30 minutes, le contenu du ballon étant vigoureusement agité. La température du réacteur est augmentée à 230°C, puis le mélange des précurseurs pour la coquille de ZnS est injecté pendant 45 minutes.

Les nanocristaux coeur/double coquille obtenus sont purifiés par la méthode décrite dans l'exemple 1.

Le rendement quantique obtenu vaut 80%.

On décrit ensuite la préparation de la fibre optique.

Dans cet exemple (exemple 3), on décrit le dépôt d'une couche de nanocristaux CdSe/CdS/ZnS à l'extrémité d'une fibre optique.

On disperse 25 mg des nanocristaux CdSe/CdS/ZnS, préparés comme on l'a décrit dans l'exemple 2, dans 1 mL de hexane. On dissout 50 mg de polyméthacrylate de méthyle [PMMA, poids 120 000] dans 1 mL de chlorobenzène anhydre. On mélange 0,03 g de la dispersion des nanocristaux avec 0,1 g de la solution de PMMA.

L'extrémité de la fibre optique a été préalablement dénudée jusqu'à sa gaine optique (en anglais, *optical cladding)* et a été clivée. Elle est ensuite trempée pendant 5 secondes dans le mélange et l'opération est répétée trois fois après environ 1 minute d'attente entre deux trempages.

Après une heure de séchage, la fibre est prête à être montée dans son embout (figure 2). Cet embout a été préalablement nettoyé et le trou qu'il comporte a été en partie rempli avec de la graisse Apiezon^{®}. La fibre est introduite dans le trou de l'embout et immobilisée pendant le collage de la gaine sur l'embout à l'aide de colle Stycast^{®}. Après 24 heures de séchage, la fibre est prête à être utilisée en tant que capteur de température.

On décrit à présent un exemple de mesure de la température à l'aide de la fibre préparée comme on l'a décrit dans l'exemple 3.

L'embout de la fibre est inséré dans un trou calibré d'un bloc thermométrique. Ce dernier comporte un capteur de température cryogénique de référence (capteur de type Germanium) et une résistance chauffante pour faire évoluer la température.

L'ensemble est introduit dans un cryostat d'essais classique, qui permet d'atteindre des températures de l'ordre de 4K à 5K et qui est uniquement muni de connecteurs électriques. L'un des connecteurs est remplacé par un presse-étoupe pour permettre le passage de la fibre optique. Cette dernière est reliée par l'intermédiaire d'un connecteur SMA au banc optique que l'on a décrit en faisant référence à la figure 3.

Le capteur de référence est associé à une centrale de mesure, par exemple une centrale de mesure CABTF fabriquée par la société MII, qui donne la température directement en kelvins.

La chaîne de mesure du capteur optique est schématisée sur la figure 4. Elle comporte, à titre purement indicatif et nullement limitatif, un générateur de signaux Wavetek^{®}, un détecteur amplificateur PDA36A de la société Thorlabs, et un amplificateur à détection synchrone SR844 de la société Stanford Research Systems, qui donne directement le déphasage entre le signal de modulation et le signal de fluorescence.

Une première mesure de phase est effectuée à température ambiante pour obtenir la référence de phase. Après refroidissement à l'aide d'hélium liquide, la température se stabilise à son minimum qui est proche de 4,2 K, (sans chauffage).

Les différents points de mesure sont ensuite balayés en injectant une puissance de chauffage variable dans le bloc de test.

Pour chaque point, et après stabilisation, on mesure la température et le déphasage auquel on retranche la référence de phase. Le temps de décroissance est ensuite calculé à l'aide de la relation mentionnée plus haut.

On peut apporter un certain nombre d'améliorations au dispositif qui a été décrit plus haut. Ces améliorations portent sur :
- la partie sensible,
- le circuit optique et la connectique, et
- l'électronique de mesure.

Pour un dispositif de mesure de température par contact, il est préférable que l'encapsulation de la partie active soit particulièrement soignée afin de protéger les nanocristaux, d'assurer un couplage thermique de bonne qualité et de minimiser le flux lumineux absorbé.

Un mode de réalisation particulier, comportant une seule fibre optique, est schématiquement représenté sur la figure 7.

Comme on le voit, une ferrule métallique 54, pourvue d'un trou calibré 56 guide et maintient l'extrémité de la fibre 12 privée de sa gaine protectrice 14. Un capot serti 58, de préférence métallique, assure la protection de la couche sensible 10 placée à l'extrémité de la fibre.

La face interne 59 du capot est polie à la manière d'un miroir pour renvoyer la lumière vers la fibre, afin d'augmenter le signal tout en imitant les pertes et donc l'échauffement du matériau.

L'extrémité de la gaine protectrice 14 est collée dans un trou 60 de la ferrule 54, qui se prolonge par le trou calibré 56 comme on le voit sur la figure 7.

Dans la mesure où il est isotherme, le capot métallique serti 58 permet d'augmenter la surface d'échange avec l'objet (non représenté) dont on veut mesurer la température.

Par ailleurs, au lieu d'utiliser un capot ayant une face interne 59 polie comme un miroir, on pourrait déposer un matériau réfléchissant la lumière sur les nanocristaux avant d'insérer l'extrémité de la fibre dans la ferrule 54.

On précise qu'il est important, notamment dans le domaine cryogénique, de limiter au maximum l'apport d'énergie vers le capteur et d'éviter la dissipation thermique au niveau de ce capteur, pour ne pas perturber la mesure par un échauffement local.

C'est pourquoi il est préférable que le signal lumineux d'excitation soit réglé à un niveau juste suffisant pour garantir la qualité de la mesure. Un tel réglage peut être effectué automatiquement dans les circuits électroniques de mesure.

C'est également pourquoi le miroir constitué par la face interne 59 du capot 58, ou par un réflecteur entourant la partie sensible du capteur, c'est-à-dire la partie pourvue des nanocristaux, est important pour diriger l'onde lumineuse de fluorescence et l'onde lumineuse incidente résiduelle vers la fibre optique afin de réduire l'absorption dans le matériau du capot 58.

Le circuit optique est de préférence muni d'un connecteur de fibre hermétique, placé à la sortie du cryostat, afin de conserver la possibilité d'un démontage, comme dans le cas des liaisons électriques classiques.

Par ailleurs, les éléments optiques d'injection de lumière dans la fibre et de séparation des signaux lumineux qui se propagent dans la fibre, à partir de la couche sensible 10, peuvent être réalisés par des techniques d'optique intégrée ou de micro-optique, afin de réduire la taille et le coût du dispositif.

Conformément à l'invention, on améliore la technique de mesure qui a été décrite en faisant référence aux figures 3 et 4 pour s'affranchir de l'influence de la longueur de la fibre sur le déphasage. Pour ce faire, on utilise, en tant que signal de référence, non pas le signal de modulation de la diode émettrice de lumière, mais le signal de modulation que l'on détecte alors sur la lumière d'excitation qui est réfléchie par l'extrémité de la fibre.

Ceci est schématiquement et partiellement illustré par la figure 8 où l'on voit un capteur de température 62, pourvu de la fibre optique 12 et formé comme on l'a expliqué en faisant référence à la figure 2 ou 7.

La fibre optique 12 est reliée, par un connecteur approprié 64, à trois autres fibres optiques, à savoir :
- une fibre 66 qui transmet la lumière d'excitation, générée par une diode émettrice de lumière 68,
- une fibre 70 qui transmet le rayonnement de fluorescence, issu de la couche sensible (non représentée) du capteur, à un photodétecteur 72 pourvu, en entrée, d'un filtre 74 passe-bande à 600 nm, et
- une fibre 76 qui transmet la lumière d'excitation réfléchie par le capteur 62, à un autre photodétecteur 78 pourvu en entrée d'un filtre 80 passe-bande à 405 nm.

Le photodétecteur 78 fournit le signal de référence et le photodétecteur 72 fournit le signal de mesure à partir duquel on peut déterminer la température.

On prévoit alors un dispositif électronique spécifique (non représenté) pour assurer le conditionnement des signaux, la mesure du déphasage et la conversion de la mesure en température, à partir de courbes de calibrage.

Dans des exemples donnés plus haut, on a utilisé une fibre optique à l'extrémité de laquelle on a placé les nanocristaux semiconducteurs. Mais on ne sortirait pas du cadre de l'invention en remplaçant la fibre par un autre guide d'onde optique, par exemple un guide d'onde optique plan, et en fixant les nanocristaux semiconducteurs à l'extrémité du guide d'onde optique.

Par ailleurs, dans des exemples donnés plus haut, on a utilisé un coeur fait de nanocristaux de CdSe.. Mais ce coeur pourrait être fait de nanocristaux d'un autre semiconducteur, apte à émettre un rayonnement de fluorescence, par exemple choisi parmi Si, Ge, ZnO, ZnS, ZnSe, ZnTe, CdS, CdTe, HgS, HgSe, HgTe, AlN, AlP, AlAs, AlSb, GaN, GaP, GaAs, GaSb, InN, InP, InAs, InSb, TlN, TlP, TlAs, TlSb, PbS, PbSe, PbTé, SnS, SnSe, SnTe, MgS, MgSe, MgTe, CaS, CaSe, CaTe, SrS, SrSe, SrTe, BaS, BaSe, BaTe, CuInE₂, AgInE₂ Cu(InₓGa₁₋ₓ)E₂, Cu₂ZnₓSn_{y}E_{1+x+2y} (où E est choisi parmi S, Se et Te et 0≤x≤1) et des mélanges de ceux-ci.

L'utilisation de la coquille externe, mentionnée plus haut, n'est pas indispensable mais préférable. Cette coquille externe peut être faite d'un semiconducteur choisi dans la liste ci-dessus, à condition que :
i) sa largeur de bande interdite soit supérieure à celle du semiconducteur utilisé pour le coeur,
ii) l'alignement des bandes des deux semiconducteurs soit de type I (confinement des électrons et des trous dans le coeur).

De même, l'utilisation de la coquille intermédiaire, mentionnée plus haut, n'est pas indispensable mais préférable. Cette coquille intermédiaire peut être faite d'un semiconducteur choisi dans la liste ci-dessus, à condition que :
i) sa largeur de bande interdite soit supérieure à celle du semiconducteur utilisé pour le coeur,
ii) l'alignement des bandes du semiconducteur de la coquille intermédiaire et du semiconducteur du coeur soit de type I (confinement des électrons et des trous dans le coeur),
iii) son paramètre de maille cristalline soit intermédiaire entre celui du matériau du coeur et celui du matériau de la coquille externe.

Toutefois, l'utilisation d'un matériaux de coquille externe ou de coquille intermédiaire ayant un alignement des bandes de type II avec le semiconducteur utilisé pour le coeur est possible.

## Revendications

1. Procédé de mesure de la température d'un objet (20), notamment d'un objet à température cryogénique, procédé dans lequel :
- on utilise un capteur (24) comportant une première couche (2) de nanocristaux d'un premier semiconducteur,
- on met la première couche de nanocristaux en contact thermique avec l'objet,
- on irradie les nanocristaux par une lumière d'excitation (26), apte à exciter les nanocristaux pour qu'ils émettent un rayonnement de fluorescence (28),
- on détecte le rayonnement de fluorescence,
- on détermine le temps de décroissance du rayonnement de fluorescence (28), le temps de décroissance étant fonction de la température à mesurer,
- on détermine la température à mesurer à partir du temps de décroissance ainsi déterminé, **caractérisé en ce que**
- le capteur comporte en outre un guide d'onde optique (12), à une extrémité duquel on place la première couche de nanocristaux, et un réflecteur (59) de lumière pour réfléchir, dans le guide d'onde optique, le rayonnement de fluorescence émis par les nanocristaux,
- on utilise le guide d'onde optique pour envoyer la lumière d'excitation (26) vers les nanocristaux et pour récupérer et transmettre le rayonnement de fluorescence (28) en vue de la détection de celui-ci, et
- on module la lumière d'excitation (26) par un signal de modulation, on mesure le déphasage entre le signal de modulation de la lumière d'excitation, qui est réfléchie par l'extrémité du guide d'onde optique, et le rayonnement de fluorescence détecté (28), et l'on détermine le temps de décroissance à partir du déphasage ainsi mesuré.

2. Dispositif de mesure de la température d'un objet (20), notamment d'un objet à température cryogénique, le dispositif comprenant :
- un capteur (24) comportant une première couche (2) de nanocristaux d'un premier semiconducteur, la première couche de nanocristaux étant prévue pour être mise en contact thermique avec l'objet,
- une source (30) de lumière d'excitation pour irradier les nanocristaux, la lumière d'excitation (26) étant apte à exciter les nanocristaux pour qu'ils émettent un rayonnement de fluorescence (28),
- un détecteur (34) du rayonnement de fluorescence, apte à fournir un signal représentatif de celui-ci,
- des circuits électroniques (42, 44, 46, 48) pour déterminer le temps de décroissance du rayonnement de fluorescence à partir du signal ainsi fourni, le temps de décroissance étant fonction de la température à mesurer, et pour déterminer la température à mesurer à partir du temps de décroissance ainsi déterminé,
**caractérisé en ce que** le capteur comprend en outre un guide d'onde optique (12) à une extrémité duquel est placée la première couche (2) de nanocristaux et un réflecteur (59) de lumière pour réfléchir, dans le guide d'onde optique, le rayonnement de fluorescence émis par les nanocristaux, et les circuits électroniques sont configurés pour moduler la lumière d'excitation (26) par un signal de modulation, pour mesurer le déphasage entre le signal de modulation de la lumière d'excitation, qui est réfléchie par l'extrémité du guide d'onde optique, et le rayonnement de fluorescence détecté (28), et pour déterminer le temps de décroissance à partir du déphasage ainsi mesuré.

3. Dispositif selon la revendication 2, dans lequel la taille des nanocristaux va de 1 nm à 10 nm.

4. Dispositif selon l'une quelconque des revendications 2 et 3, dans lequel le premier semiconducteur est choisi parmi Si, Ge, ZnO, ZnS, ZnSe, ZnTe, CdS, CdSe, CdTe, HgS, HgSe, HgTe, AIN, AlP, AlAs, AlSb, GaN, GaP, GaAs, GaSb, InN, InP, InAs, InSb, TlN, TlP, TlAs, TlSb, PbS, PbSe, PbTe, SnS, SnSe, SnTe, MgS, MgSe, MgTe, CaS, CaSe, CaTe, SrS, SrSe, SrTe, BaS, BaSe, BaTe, CulnE₂, AgInE₂ Cu (InₓGa₁₋ₓ) E₂, Cu₂ZnₓSn_{y}E_{1+x+2y} (où E est choisi parmi S, Se et Te et 0≤x≤1) et des mélanges de ceux-ci.

5. Dispositif selon l'une quelconque des revendications 2 à 4, dans lequel
- le capteur comprend en outre une deuxième couche (6) de nanocristaux d'un deuxième semiconducteur, qui entoure la première couche (2), et
- la largeur de bande interdite du deuxième semiconducteur est supérieure à la largeur de bande interdite du premier semiconducteur.

6. Dispositif selon la revendication 5, dans lequel
- le capteur comprend en outre une troisième couche (4) de nanocristaux d'un troisième semiconducteur, entre les première et deuxième couches (2, 6),
- la largeur de bande interdite du troisième semiconducteur est supérieure à la largeur de bande interdite du premier semiconducteur, et
- le paramètre de maille cristalline du troisième semiconducteur est intermédiaire entre celui du premier semiconducteur et celui du deuxième semiconducteur.

## Patentansprüche

1. Verfahren zum Messen der Temperatur eines Objekts (20), insbesondere eines Objekts bei kryogener Temperatur, in welchem Verfahren:
- man einen Sensor (34) verwendet, der eine erste Schicht (2) aus Nanokristallen eines ersten Halbleiters umfasst,
- man die erste Schicht aus Nanokristallen in thermischen Kontakt mit dem Objekt bringt,
- man die Nanokristalle mit einem Anregungslicht (26) bestrahlt, das dazu ausgelegt ist, die Nanokristalle anzuregen, damit sie eine Fluoreszenzstrahlung (28) emittieren,
- man die Fluoreszenzstrahlung erfasst,
- man die Abklingzeit der Fluoreszenzstrahlung (28) bestimmt, wobei die Abklingzeit eine Funktion der zu messenden Temperatur ist,
- man die zu messende Temperatur ausgehend von der derart bestimmten Abklingzeit bestimmt,
**dadurch gekennzeichnet, dass**:
- der Sensor ferner einen optischen Wellenleiter (12) umfasst, an dessen einem Ende man die erste Schicht aus Nanokristallen platziert, sowie einen Lichtreflektor (59), um die durch die Nanokristalle emittierte Fluoreszenzstrahlung in den optischen Wellenleiter zu reflektieren,
- man den optischen Wellenleiter verwendet, um das Anregungslicht (26) zu den Nanokristallen zu schicken, und um die Fluoreszenzstrahlung (28) im Hinblick auf deren Erfassung zu sammeln und zu übertragen, und
- man das Anregungslicht (26) mit einem Modulationssignal moduliert, man die Phasenverschiebung zwischen dem Modulationssignal des Anregungslichts, das von dem Ende des optischen Wellenleiters reflektiert wird, und der erfassten Fluoreszenzstrahlung (28) misst, und man die Abklingzeit ausgehend von der derart gemessenen Phasenverschiebung bestimmt.

2. Vorrichtung zum Messen der Temperatur eines Objekts (20), insbesondere eines Objekts bei kryogener Temperatur, wobei die Vorrichtung umfasst:
- einen Sensor (24), umfassend eine erste Schicht (2) aus Nanokristallen eines ersten Halbleiters, wobei die erste Schicht aus Nanokristallen dazu vorgesehen ist, in thermischen Kontakt mit dem Objekt gebracht zu sein,
- eine Quelle (30) von Anregungslicht, um die Nanokristalle zu bestrahlen, wobei das Anregungslicht (26) dazu ausgelegt ist, die Nanokristalle anzuregen, damit sie eine Fluoreszenzstrahlung (28) emittieren,
- einen Detektor (34) für die Fluoreszenzstrahlung, der dazu ausgelegt ist, ein für diese repräsentatives Signal zu liefern,
- elektronische Schaltungen (42, 44, 46, 48), um die Abklingzeit der Fluoreszenzstrahlung ausgehend von dem derart gelieferten Signal zu bestimmen, wobei die Abklingzeit eine Funktion der zu messenden Temperatur ist, und um die zu messende Temperatur ausgehend von der derart bestimmten Abklingzeit zu bestimmen,
- **dadurch gekennzeichnet, dass** der Sensor ferner einen optischen Wellenleiter (12) umfasst, an dessen einem Ende die erste Schicht (2) aus Nanokristallen sowie ein Lichtreflektor (59) platziert ist, um das von den Nanokristallen emittierte Fluoreszenzlicht in den optischen Wellenleiter zu reflektieren, und wobei die elektronischen Schaltungen dazu ausgelegt sind, das Anregungslicht (26) mit einem Modulationssignal zu modulieren, um die Phasenverschiebung zwischen dem Modulationssignal des Anregungslichts, das von dem Ende des optischen Wellenleiters reflektiert wird, und der erfassten Fluoreszenzstrahlung (28) zu messen, und um die Abklingzeit ausgehend von der derart gemessenen Phasenverschiebung zu bestimmen.

3. Vorrichtung nach Anspruch 2, bei der die Größe der Nanokristalle von 1 nm bis 10 nm beträgt.

4. Vorrichtung nach einem der Ansprüche 2 und 3, bei der der erste Halbleiter ausgewählt ist aus Si, Ge, ZnO, ZnS, ZnSe, ZnTe, CdS, CdSe, CdTe, HgS, HgSe, HgTe, AlN, AlP, AlAs, AlSb, GaN, GaP, GaAs, GaSb, InN, InP, InAs, InSb, TlN, TlP, TlAs, TlSb, PbS, PbSe, PbTe, SnS, SnSe, SnTe, MgS, MgSe, MgTe, CaS, CaSe, CaTe, SrS, SrSe, SrTe, BaS, BaSe, BaTe, CuInE₂, AgInE₂ Cu (InₓGa₁₋ₓ)E₂, Cu₂ZnₓSnyE_{1+x+2y} (wobei E ausgewählt ist aus S, Se und Te und 0≤x≤1) und Mischungen derselben.

5. Vorrichtung nach einem der Ansprüche 2 bis 4, bei der
- der Sensor ferner eine zweite Schicht (6) aus Nanokristallen eines zweiten Halbleiters umfasst, die die erste Schicht (2) umgibt, und
- die Breite der verbotenen Zone des zweiten Halbleiters größer ist als die Breite der verbotenen Zone des ersten Halbleiters.

6. Vorrichtung nach Anspruch 5, bei der
- der Sensor ferner eine dritte Schicht (4) aus Nanokristallen eines dritten Halbleiters zwischen der ersten und der zweiten Schicht (2, 6) umfasst,
- die Breite der verbotenen Zone des dritten Halbleiters größer ist als die Breite der verbotenen Zone des ersten Halbleiters, und
- die Kristallgitterkonstante des dritten Halbleiters zwischen jener des ersten Halbleiters und jener des zweiten Halbleiters ist.

## Claims

1. A method for measuring the temperature of an object (20), notably of an object at a cryogenic temperature, a method wherein:
- a sensor (24) including a first layer (2) of nanocrystals of a first semiconductor is used,
- the first layer of nanocrystals is put into thermal contact with the object,
- the nanocrystals are irradiated with an excitation light (26), capable of exciting the nanocrystals so that they emit fluorescence radiation (28),
- the fluorescence radiation is detected,
- the decay time of the fluorescence radiation (28) is determined, the decay time depending on the temperature to be measured,
- the temperature to be measured is determined from the thereby determined decay time,
**characterized in that**
- the sensor further includes an optical waveguide (12), at one end of which is placed the first layer of nanocrystals, and a light reflector (59) for reflecting, in the optical waveguide, the fluorescence radiation emitted by the nanocrystals,
- the optical waveguide is used for sending the excitation light (26) towards the nanocrystals and for recovering and transmitting the fluorescence radiation (28) for detection of the latter, and
- the excitation light (26) is modulated with a modulation signal, the phase shift between the modulation signal of the excitation light, which is reflected by the end of the optical waveguide, and the detected fluorescence radiation (28) are measured, and the decay time is determined from the thereby measured phase shift.

2. A device for measuring the temperature of an object (20), notably an object at a cryogenic temperature, the device comprising:
- a sensor (24) including a first layer (2) of nanocrystals of a first semiconductor, the first layer of nanocrystals being intended to be put into thermal contact with the object,
- a source (30) of excitation light for irradiating the nanocrystals, the excitation light (26) being able to excite the nanocrystals so that they emit fluorescence radiation (28),
- a detector (34) of the fluorescence radiation, capable of providing a representative signal of the latter,
- electronic circuits (42, 44, 46, 48) for determining the decay time of the fluorescence radiation from the thereby provided signal, the decay time depending on the temperature to be measured, and for determining the temperature to be measured from the thereby determined decay time,
**characterized in that** the sensor further comprises an optical waveguide (12) at one end of which is placed the first layer (2) of nanocrystals and a light reflector (59) for reflecting, in the optical waveguide, the fluorescence radiation emitted by the nanocrystals, and the electronic circuits are configured for modulating the excitation light (26) with a modulation signal, in order to measure the phase shift between the modulation signal of the excitation light, which is reflected by the end of the optical waveguide, and the detected fluorescence radiation (28), and for determining the decay time from the thereby measured phase shift.

3. The device according to claim 2, wherein the size of the nanocrystals ranges from 1 nm to 10 nm.

4. The device according to any one of claims 2 and 3, wherein the first semiconductor is selected from among Si, Ge, ZnO, ZnS, ZnSe, ZnTe, CdS, CdSe, CdTe, HgS, HgSe, HgTe, AlN, AlP, AlAs, AlSb, GaN, GaP, GaAs, GaSb, InN, InP, InAs, InSb, TlN, TlP, TlAs, TlSb, PbS, PbSe, PbTe, SnS, SnSe, SnTe, MgS, MgSe, MgTe, CaS, CaSe, CaTe, SrS, SrSe, SrTe, BaS, BaSe, BaTe, CuInE₂, AgInE₂, Cu(InₓGa₁₋ₓ)E₂, Cu₂ZnₓSn_{y}E_{1+x+2y} (wherein E is selected from S, Se and Te and 0≤x≤1) and mixtures thereof.

5. The device according to any one of claims 2 to 4, wherein
- the sensor further comprises a second layer (6) of nanocrystals of a second semiconductor, which surrounds the first layer (2), and
- the forbidden band width of the second semiconductor is greater than the forbidden band width of the first semiconductor.

6. The device according to claim 5, wherein
- the sensor further comprises a third layer (4) of nanocrystals of a third semiconductor, between the first and second layers (2, 6),
- the forbidden band width of the third semiconductor is greater than the forbidden band width of the first semiconductor, and
- the crystal lattice parameter of the third semiconductor is intermediate between that of the first semiconductor and that of the second semiconductor.
